# EUROPEAN PATENT APPLICATION

(11) **EP 2 096 797 A1**
(43) Date of publication of application: **02.09.2009**
(21) Application number: 08250654.4
(22) Date of filing: 26.02.2008
(51) Int. Cl.: H04L 12/28

(54) **Mobile communiction access point**

(71) Applicant: British Telecommunications public limited company, 81 Newgate Street London EC1A 7AJ (GB)
(72) Inventor: The designation of the inventor has not yet been filed
(74) Representative: Lidbetter, Timothy Guy Edwin

(57) **Abstract**

An repeater device 11 connects to a master femtocell (cellular access point) 10 device, which in turn connects directly to the Internet 3 by means of a broadband access circuit 2, and through the Internet to the fixed infrastructure of a cellular network.

The inbuilt radio configuration services of the repeater femtocell 11 and master femtocell 10 allow it to configure its co-existence with the main femtocell unit, to ensure the optimum coverage is provided for the user, without interference between the two units.

## Description

This invention relates to mobile communications, and in particular to very-short-range wireless access points. Such access points, known as Access Point Base Stations or femtocells, give wireless coverage in a limited area. They are individual standalone access points that connect to a broadband access circuit on the network interface and provide GSM or "3G" (UMTS) connectivity to mobile devices within the local range of the access point. The use of such access points complements existing cellular network implementations and provides coverage in locations where cellular coverage transmission may be reduced because of its inability to successfully penetrate through building structures. Unlike normal cellular base stations, (including so-called microcells and picocells) femtocells are not connected directly to the cellular switching system, and the neighbouring cells do not have any awareness of their presence.

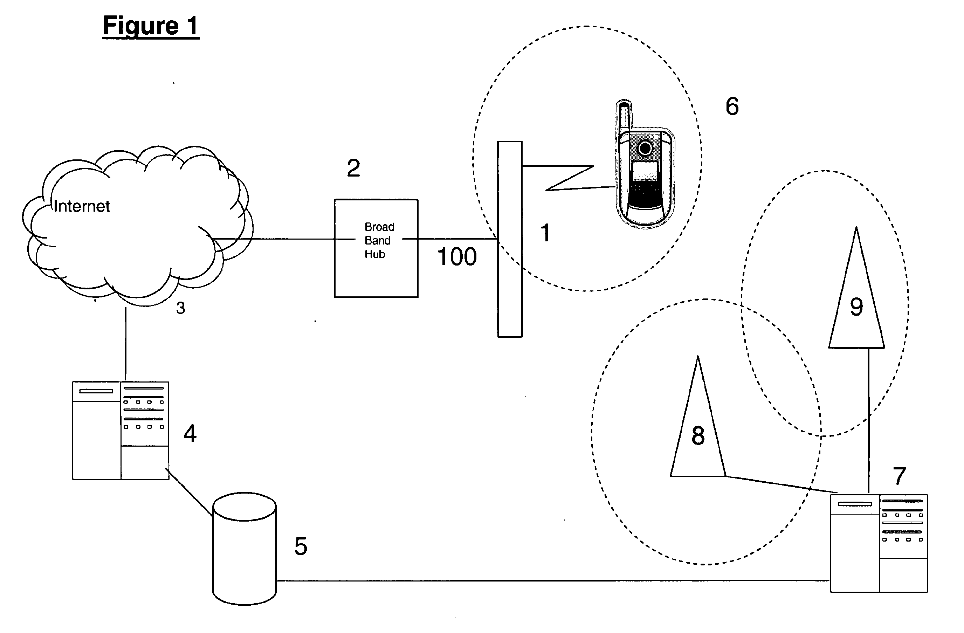

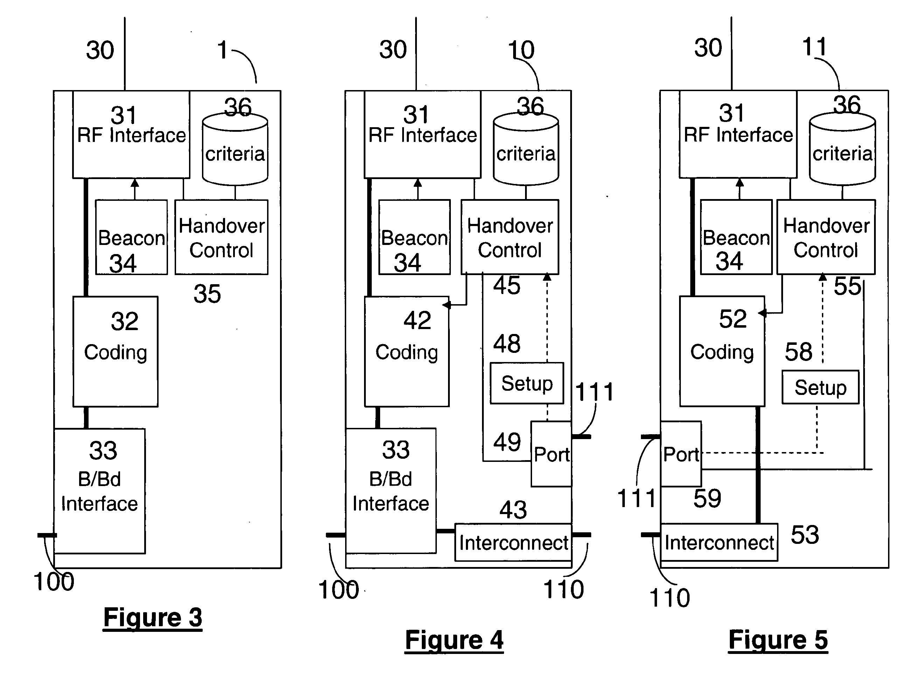

A typical example is illustrated in Figures 1 and 3. Figure 1 depicts a UMTS ("3G") cellular access point base station 1, connected through an Ethernet or broadband connection 100 and an internet access point 2 to the Internet 3 (or an intranet), and thus to a dedicated mobile switching centre 4 which reports handovers to the user's home location register 5 in the conventional manner when a mobile terminal 6 begins or terminates communication with the base station 1.

As shown in Figure 3, the conventional access point base station 1 comprises an antenna 30 for communication with one or more mobile terminals 6. The signals received by the antenna are demodulated from the RF carrier by an RF transmitter/receiver 31, the coding converted to a form suitable for carrying over the broadband connection 100 by a codec 32 and then transmitted by an ethernet interface 33 or the like onto the broadband connection 100. Similarly, signals received by the ethernet interface 33 are converted by the codec 32 to a form suitable for modulation onto an RF carrier by the RF interface 31 and transmitted by the antenna 30. The access point 1 also includes a beacon function 34 to transmit an RF signal advertising its availability over the RF transmitter 31, and a handover control function 35 for handling the interactions with mobile handsets to allow them to establish and relinquish connection with the access point 1, according to criteria relating to signal quality or the like maintained in a data store 36.

Access Point Base Stations do not form part of the cellular channel plan used by the overlay network 7, 8, 9, but operate in another part of the spectrum compatible with standard cellular handsets. As they are not part of the planned overlay network they do not operate a neighbour list for handover control - neither do they appear on the neighbour lists of any of the nearby public base stations 8, 9 in the area. Such neighbour lists are provided in the public network to assist the mobile unit to identify a base station to which to hand over when signal strength is deteriorating on the currently-serving baser station, to avoid loss of signal, particularly when a mobile unit is moving rapidly. The absence of a neighbour list is of less importance in the circumstances in which a femtocell is likely to be used, as its small range means that connection to it during rapid movement is neither possible nor desirable.

A handset coming into range of a base station 1 not on the neighbour list of its currently serving base station 9 can nevertheless hand over to it, so handover between a femtocell and the overlay network can still take place. This applies whether or not the coverage provided by the femtocell 1 overlaps that of the nearest base station 9 or not. The cellular network as a whole, and specifically the home location register 5, has no information relating to the geographical location of the femtocell 1, so the handset will appear to jump from part of the network served by one mobile switching centre 7 to another part served by a different mobile switching centre 4.

Note that handover is an autonomous process - there is no interaction with the cellular network 7 to determine whether handover should take place. The handset access point 1 simply reports to the HLR 5 the fact of connection or loss of connection between the access point 1 and the handset 6. The network 7 will similarly report to the HLR 5 that connection with the handset 6 has been lost or established.

Application of VolP (Voice over Internet Protocol allows such a unit 1 to be deployed as readily as a wi-fi (IEEE 802.11) access point, and provides the same capabilities as a normal cellular base station.

Femtocells can deliver many of the benefits of fixed-mobile convergence without the need for a dual-mode (e.g. GSM and WiFi) handset.

In the open air the coverage of such an access point may extend to about 500 metres around the device. Access points installed indoors provide more limited coverage and, as with conventional cordless (DECT) base stations, some dead spots may be encountered. The bleed of coverage outside a building such as a house will be small, because of the way that the access points interact with the surrounding macro networks, combined with the blocking effect of building structures. For larger properties and business sites coverage may be incomplete.

It would be possible to provide two or more femtocells to provide coverage in such circumstances. However, these would compete with each other for bandwidth on the internet connection, and if they are operating independently they would not be able to arrange efficient handovers.

The present invention provides a device that can be used to extend the coverage of a femtocell device.

According to the invention, there are provided first and second Access Point Base Stations each having interface means for communicating with the other, and both having means for wireless communication with cellular mobile terminals, one of the Access Point Base Stations having an external connection for communication with an external communications network, the first Access Point Base Station having a controller for configuring the second Access Point Base Station such that the Access Point Base Stations both communicate with the external communications network through the same said external connection, and that the Access Point Base Stations co-operate to provide wireless coverage to mobile terminals within the combined range of the Access Point Base Stations. The second (repeater) device can therefore replicate the mobile features of the first (master) femtocell device and is caused to operate as an extension of the first femtocell.

This arrangement allows the Access Point Base Stations to act as a single cell of the cellular system. This simplifies handover as the overlay cellular network does not need to manage the handover process when a mobile unit transfers between the Access Point Base Stations. This is particularly useful as, without any data on the location of individual Access Point Base Stations, the network is unable to assist in managing handover either to or from an Access Point Base Station, and in particular between two such Access Point Base Stations.

Preferably the external connection is made through the first access point base station, (the master station) as this configuration allows it to work autonomously in the absence of a second base station, although this is not essential. The first (master) station may co-operate with more than one second (repeater) station.

In one embodiment the master station allocates different channel plans to itself and to the, or each, repeater. However, if the repeaters are used indoors, perhaps each in different rooms, it is quite possible that there is no overlap in their coverage, and hence no interference between them. Each station may therefore be configured to determine whether interference exists between itself and other stations, and allow the master unit to allocate the same channels to stations which do not interfere. This can be particularly useful if several repeaters are deployed. For example each repeater may cover a different room, each room leading off a common area covered by the master station. In such situations, the repeaters may all have overlapping coverage with the master unit but not with each other.

An embodiment will be described with reference to the Figures, in which:
Figure 1 is a schematic illustration of a prior art Access Point Base Station installed to provide cellular capability away from the range of the overlay network, and has already been discussed;
Figure 2 is a schematic illustration of a master and repeater Access Point Base Station combination in accordance with the present invention;
Figure 3 is a schematic illustration of the prior art access point base station of Figure 1, and has already been discussed
Figure 4 is a schematic illustration of the master Access Point Base Station of Figure 2 in more detail;
Figure 5 is a schematic illustration of the repeater Access Point Base Station of Figure 2 in more detail.
Figure 6 is a schematic illustration of the master Access Point Base Station of a second embodiment.
Figure 7 is a schematic illustration of the repeater Access Point Base Station of the second embodiment.
Figure 8 is a schematic illustration of an arrangement of a master Access Point Base Station with two repeaters in accordance with the present invention;
Figure 9 depicts the process of setting up the master and repeater stations to co-operate with each other.

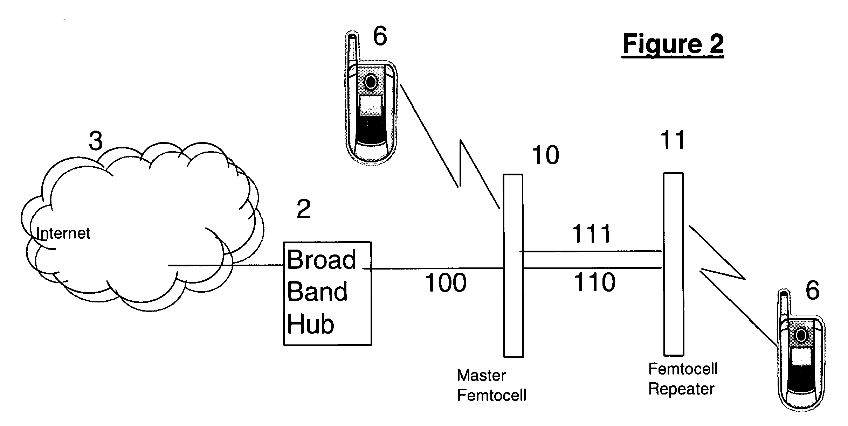

As shown in Figure 2, an interface device 11 connects to a master femtocell 10 device, which in turn connects directly to the Internet 3 by means of a broadband access circuit 2. Access 100, 110 between the hub 2, the master femtocell 10 and the repeater femtocell 11 may be by direct cable connection (e.g. USB or Ethernet), a wireless connection (e.g. "Bluetooth" or "Wifi") or any other suitable means. Either femtocell 10,11 may operate as the master cell, but it is advantageous for the master unit to be the one connected directly to the hub 2 as this allows that unit to continue to operate in the event of removal or failure of the other cell 11 or the interconnecting link 110.

The inbuilt radio configuration services of the repeater femtocell allow it to configure its co-existence with the main femtocell unit, to ensure the optimum coverage is provided for the user, without interference between the two units. This will now be discussed in more detail, with reference to Figures 4 and 5.

Figure 4 depicts a "master" access point 10, whilst Figure 5 depicts a complementary repeater unit 11. These units both have all the elements of the prior art access point shown in Figure 3, but the Ethernet connection 33 in the master unit has a second input/output 43 for connection 110 to a complementary input/output 53 in the repeater device 11. This connection 110 is preferably made by direct cable connection using the same type of connection as the external interface 33 (e.g. USB or Ethernet). This reduces the amount of recoding required in the master unit 10, and also allows the repeater unit 11 to be of a common design with the master unit 10. This commonality allows either unit 10, 11 to be used as the master unit, or alone. However, instead of an Ethernet connection, a wireless connection (e.g. "Bluetooth" or "Wifi") or any other suitable means for the connection between the units 10, 11.

A second connection 111 is also created between the units 10, 11. This may be carried over the same physical connection as the aforementioned interconnection 110, but for clarity it is depicted in the Figures as a separate connection 111 between complementary ports 49 59. This connection is used to allow the handover control units 45, 55 of the two access points 10, 11 to co-operate with each other.

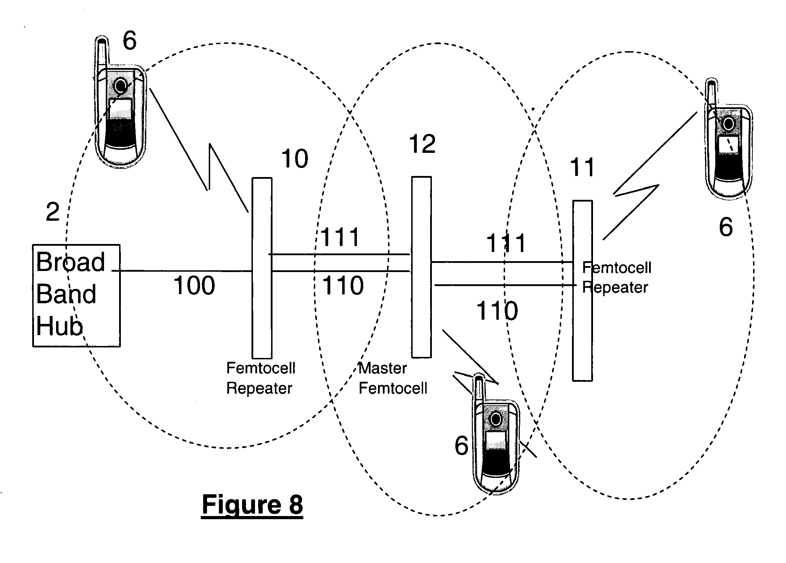

One of the units, hereinafter referred to as the master unit controls the handover process, the other taking instructions from the master unit. In general it is convenient for the master unit to be the unit 10 connected to the broadband connection, as in the event of failure of the connection 110 or of the repeater unit 11, the master unit 10 can continue to function. However, in some circumstances it may be advantageous for another unit to be the master unit. An example of where this may be desirable is illustrated in Figure 8. In this case there are three units 10, 11, 12. As in the other embodiments, one of the units (10) is connected to the internet 3 through a connection 100. However, another of the units (12) is best positioned to act as master unit because it has direct connections 110, 111 to both the other two units (10, 11). Rather than the physical connections 110, 111, it may instead be the extent of radio coverage, and therefore the likelihood of handover, which determines the selection of the master unit. Such selection may be performed by the user on installation, or may be achieved automatically by mediation between the respective setup functions 48, 58.

However, in the following discussion it will be assumed that the master unit is the unit 10 connected to the broadband hub 2.

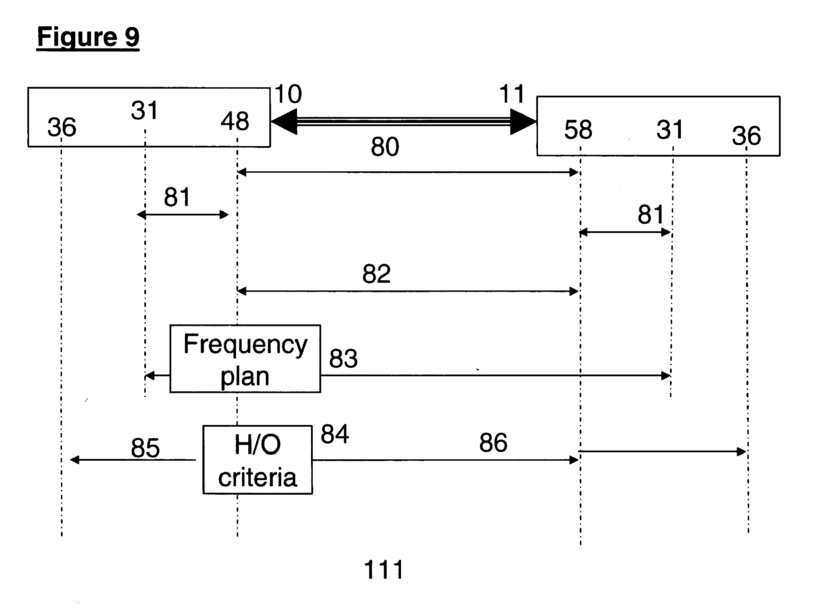

The setting-up process is shown in Figure 9. When the connection 111 is established between the devices 10, 11 (step 80), a set-up function 48, 58 is initiated in each device 10, 11 (step 81). This may be initiated automatically when the devices 10, 11 detect each others' presence on the connection 111, or may be initiated by a user. In this step the two devices perform initial handshake functions, determine which unit 10 is to be the master unit, and exchange beacon identities. The handover setup functions 48.58 then exchange data through the control connection 111 to establish handover criteria to be applied to the handover processors 45, 55. In particular the access points 10, 11 each attempt to detect the other's beacon signal 34 at their respective RF interfaces 31 (step 82). If either station can detect the other's beacon a frequency plan is adopted by the access points 10, 11 to avoid interference between them (step 83).

The master unit 10 then modifies the criteria 36 for handover from the default condition of a singleton device in which handover depends only on comparison with the overlay network, (step 84), updates its own handover criteria (step 85) and transmits the criteria to the handover setup function 58 of the repeater unit 11 (step 86) so that it can do the same. In particular, these criteria require each device 10, 11 to record the other as a neighbour, to facilitate handover in the same way that is done in the overlay network.

Once the units 10, 11 (12) have been configured, they operate as follows.

The determination of whether the master 10 or repeater 11 is to handle the call is controlled by the handover control units 45, 55 in the respective access points 10, 11.

The handover control units 45, 55 generally operate as in a conventional access point 1 (Figure 3), taking or relinquishing control of the mobile units as they come in and out of range, and reporting such handovers to the cellular network 7. However, they also co-operate through the control interface 111 to determine which of the access points should currently have control of the mobile unit. Handover between the units 10, 11 is similar to handover between any two cells of a normal network, except that control is maintained within one of the handover control units 45 (the designated "master" unit). To the cellular network 7and HLR 5 the units appear as a single femtocell, as no reporting is required for handovers between the main unit 10 and repeater 11.

For outgoing traffic, the access point 10 connected to the hub 3 receives call traffic at its external connection interface 33 from both the codec 42 and from the interconnection 43 with the co-operating unit 11, and passes all such data on to the output 100 and thus to the hub 2. Conversely, data received by the interface 33 from the hub 2 is passed both to the unit's own codec 42 and the interconnection 43. The codecs 42, 52 in each unit 10, 11 each operate in a similar manner to the codec 32 of the prior art access point 1, but they are controlled by their respective handover control units 45, 55 to first analyse incoming traffic and determine whether its is intended for a handset 6 currently served by the respective station 10, 11. If they are, it handles the traffic as normal, but if the handset for which the signals are destined is currently served by the other station (11, 10 respectively) the codec 42, 52 disregards them.

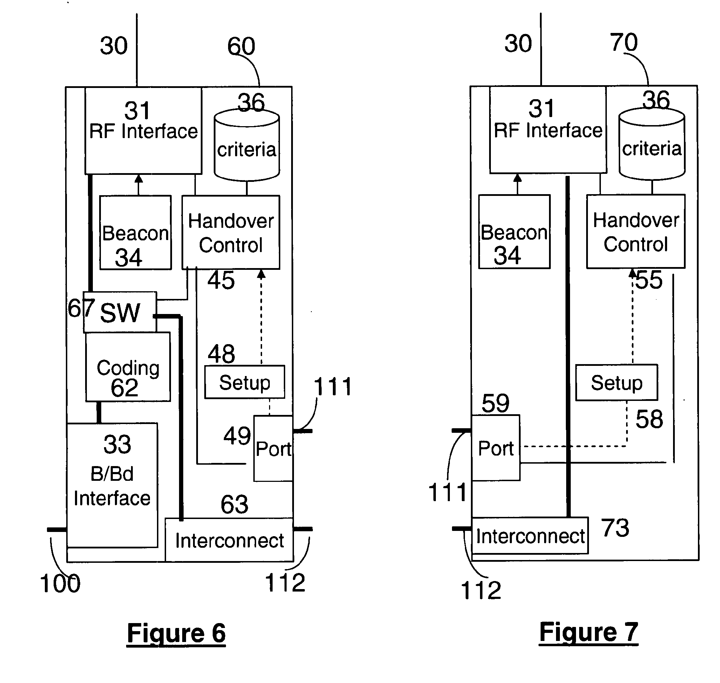

In an alternative embodiment (Figures 6 and 7) the codec 62 in the master unit 60 processes all calls for both itself and the repeater 70, the handover control 45 controlling a switch 67 to direct the traffic either to its own RF interface 31 or to the interconnection 63 - 112 - 73 with the other access point 70 and thus to the RF interface 31 of the repeater 70.

In the embodiment of Figures 4 and 5, the master and repeater devices may be identical, the identity of the master device being determined simply by which one is connected directly to the broadband connection 100. However, in the embodiment of figures 6 and 7, only the master device 60 has a codec, and it exchanges data with either its own RF interface 31 or that of the repeater 70, according to the instructions of the handover controller 45. This allows the repeater 70 to be simpler, as it does not require a codec, but it requires two different types of unit, because the repeater 70 also requires the interconnection 112 to handle data in the form needed by the RF interface, rather than in the form used by the internet connection 100.

The combined devices 10, 11 (or 60, 70) interface with the mobile network operator 7 as if they were a single femtocell. All interaction with either the broadband network 3 or the 3g or GSM mobile networks 7 is instigated by the femtocell device 10 (60) connected to the network: the secondary repeater device 11, (70) will only interact with the main/initial femtocell device.

The main and repeater femtocell devices handle handover/roving of any authorised user's mobile device, and do not need to inform or have the assistance of the mobile or broadband networks to accomplish the roving of a mobile device. The roving between main and repeater femtocell device is seamlessly accomplished with calls in progress being maintained.

Roving between main and repeater femtocell devices 10, 11 is achieved by the handover control unit 45 in the main unit 10 detecting that it is losing signal strength from a mobile device 6: it then communicates to the secondary/repeater femtocell 11, whose own handover control unit 55 determines whether the repeater unit 11 can detect the mobile device 6 and whether signal strength is good and improving. When agreement is achieved between the two handover control units 45, 55, handover can take place. The agreement criteria are stored (store 36) within the two devices 10, 11 as a set of possible service levels. for example the handover control units 45, 55 may be set to start roving dialog when a handset's signal strength is within 20% of that known to cause voice transmission errors, combined with the receiving device/femtocell signal strength to the mobile device being better than 20% above the level known to cause voice transmission errors, but signal strength growing/improving. These figures may be set to be configurable within the software of the femtocell devices.

When agreement has been confirmed between the handover interface units 48, 58 of the main and repeater device then the repeater device 11 will take over control of the 3g or GSM radio connection to the mobile device 6, looking exactly like the main femtocell device 10 as far as the mobile user device is concerned. Connectivity with the broadband network 3 will now be to the repeater femtocell device 11 via the interconnection 110 with the main/initial femtocell device.

Handover in the reverse direction takes place in the same way.

## Claims

1. In combination, first and second Access Point Base Stations each having interface means for communicating with the other, and both having means for wireless communication with cellular mobile terminals, one of the Access Point Base Stations having an external connection for communication with an external communications network, the first Access Point Base Station having a controller for configuring the second Access Point Base Station such that the Access Point Base Stations both communicate with the external communications network through the same said external connection, and that the Access Point Base Stations co-operate to provide wireless coverage to mobile terminals within the combined range of the Access Point Base Stations.

2. The combination of claim 1, wherein the external connection is made through the first access point base station.

3. The combination of claim 1 or claim 2, wherein the first station has provision to co-operate with more than one second station.

4. The combination of any preceding claim, in which the first station has means for allocating different channel plans to itself and to the, or each, other station.

5. The combination of claim 4, wherein each station is configured to determine whether interference exists between itself and the other station or stations, and report the findings to the first unit, such that the first unit can allocate the same channels to stations which do not interfere.

6. The combination of any of claims 1 to 5, wherein the first station has routing means for routing signals to the radio interface of either itself or the second unit according to the handover instructions.

7. The combination of claim 6, wherein each unit has a codec for converting signals between a first form suitable for the external connection and a second form suitable for the radio interface, data being exchanged between the first and second units in the first form.

8. The combination of claim 6, wherein the first unit has a codec for converting signals between a first form suitable for the external connection and a second form suitable for the radio interface, data being exchanged between the first and second units in the second form.

9. The combination of any preceding claim, wherein at least one of the units is configured such that it can operate as a stand-alone access point base station.

10. The combination of any preceding claim, wherein at least one of the units is configured such that it can operate as a unit of either the first or the second type.
